Europäisches Patentamt

European Patent Office

Office européen des brevets

(11) Veröffentlichungsnummer: **0 349 850**

**A1**

## EUROPÄISCHE PATENTANMELDUNG

(21) Anmeldenummer: 89111447.2

(22) Anmeldetag: 23.06.89

(51) Int. Cl.⁴: **H02K 7/18**

(30) Priorität: 05.07.88 DE 3822680

(43) Veröffentlichungstag der Anmeldung:
**10.01.90 Patentblatt 90/02**

(84) Benannte Vertragsstaaten:
**ES FR GB GR IT NL SE**

(71) Anmelder: **Osterkamp, Franz**
**Albersallee 12**
**D-4190 Kleve(DE)**

(72) Erfinder: **Osterkamp, Franz**
**Albersallee 12**
**D-4190 Kleve(DE)**

(74) Vertreter: **Funken, Josef, Dipl.-Ing.**
**Hochstrasse 3e**
**D-4133 Neukirchen-Vluyn(DE)**

(54) Vorrichtung zur Gewinnung elektrischer Energie.

(57) Bei einer Vorrichtung zur Gewinnung elektrischer Energie mit einem mit Flüssigkeit teilgefüllten langgestreckten Flüssigkeitsbehälter, dessen beide Enden unter Bildung je einer Luftkammer hochgezogen sind, mit zwei an den hochgezogenen Enden des Flüssigkeitsbehälters über je ein Zwischenstück angeordneten Schaufelradgehäusen mit auf Wellen drehbar gelagerten Schaufelrädern und mit Auslaß- und Einlaßventilen und mit von den Wellen angetriebenen elektrischen Generatoren ist vorgesehen, daß ein Schwimmkörper zur Anordnung auf einem größeren Gewässer mit genügend hohem Wellengang mit einer Trägerplattform vorgesehen ist, auf der der Flüssigkeitsbehälter gelagert ist, daß an dem Schwimmkörper seitlich Gelenke angeordnet sind und daß der Schwimmkörper durch an den Gelenken angeordnete Drahtseile am Boden des Gewässers verankert ist.

Die Erfindung betrifft eine Vorrichtung zur Gewinnung elektrischer Energie mit einem mit Flüssigkeit teilgefüllten langgestreckten Flüssigkeitsbehälter, dessen beide Enden unter Bildung je einer Luftkammer hochgezogen sind, mit zwei an den hochgezogenen Enden des Flüssigkeitsbehälters über je ein Zwischenstück angeordneten Schaufelradgehäusen mit auf Wellen drehbar gelagerten Schaufelrädern und mit Auslaß- und Einlaßventilen und mit von den Wellen angetriebenen elektrischen Generatoren.

Aus der DE-OS 24 26 861 ist eine solche Vorrichtung bekannt. Der Flüssigkeitsbehälter hat eine Bodenplatte, eine obere Deckplatte und Seiten, wobei die Bodenplatte an beiden Ende hochgeführt ist, ebenso die Seiten sowie die obere Deckplatte, wodurch an jedem Ende des Flüssigkeitsbehälters eine rechteckige Öffnung entsteht.

Die Laufschaufelräder, die sich in einem geschlossenen Rohr befinden, sind durch ein Zwischenstück, das in Laufrichtung der Schaufellaufräder geführt ist, an den oberen rechteckigen Öffnungen luftdicht mit dem Flüssigkeitsbehälter verbunden. Das Rohr hat je eine Öffnung für das Aus- und Einlaßventil.

Diese Vorrichtung ist zur Aufladung der Batterien eines durch Elektromotoren betriebenen Fahrzeuges während der Fahrt im Fahrzeug so angeordnet, daß sich ein Laufschaufelrad in Fahrtrichtung vorn an der Stirnseite und das andere an der hinteren Seite des Flüssigkeitsbehälters befindet. Durch die Wellenbildung entsteht in der einen Luftkammer im oberen Ende des Flüssigkeitsbehälters ein Luftdruck, der das Laufschaufelrad über das Luftauslaßventil in Bewegung setzt. Gleichzeitig bildet sich am anderen Ende des Flüssigkeitsbehälters ein Vakuum. Dieses wird durch den Eintritt der Luft durch das Einlaßventil bei gleichzeitiger Inbetriebsetzung des Laufschaufelrades wieder aufgefüllt. Die Laufschaufelräder werden somit durch den wechselweisen Lufteint- und -austritt fortlaufend in Bewegung gehalten.

Am oberen Ende der Luftkammern befindet sich je ein Schwimmerventil, damit die im Behälter befindliche Flüssigkeit nicht in den Bereich der Laufschaufelräder kommen kann.

Der Erfindung liegt die Aufgabe zugrunde, eine Vorrichtung der einleitend genannten Art zu schaffen, mit der die Wellenbewegung eines Gewässers zur Gewinnung von elektrischer Energie genutzt werden kann.

Diese Aufgabe wird erfindungsgemäß dadurch gelöst, daß ein Schwimmkörper zur Anordnung auf einem größeren Gewässer mit genügend hohem Wellengang mit einer Trägerplattform vorgesehen ist, auf der der Flüssigkeitsbehälter gelagert ist, daß an dem Schwimmkörper seitlich Gelenke angeordnet sind und daß der Schwimmkörper durch an den Gelenken angeordnete Drahtseile am Boden des Gewässers verankert ist.

Auf diese Weise gelangt man zu einer Vorrichtung mit der die Wellenbewegungen eines Gewässers, auf dem diese Vorrichtung schwimmt, zur Gewinnung von Energie, insbesondere von elektrischer Energie genutzt werden kann.

Nach einem weiteren Merkmal der Erfindung kann die Anordnung so getroffen sein, daß der Schwimmkörper aus einem wannenförmigen Bodenteil besteht, das luftdicht mit einer Grundplatte verschlossen ist, wobei auf der Grundplatte der Flüssigkeitsbehälter und der Generatorenteil gelagert sind.

Zweckmäßig ist auf der Grundplatte ein Getriebe für den Generatorenteil angeordnet.

Des weiteren empfiehlt es sich, an den tiefsten Punkten der Schaufelradgehäuse Abtropfventile vorzusehen, damit Flüssigkeit, die in die Schaufelradgehäuse gelangt, durch die Abtropfventile aus den Schaufelradgehäusen herausfließen kann.

Zweckmäßig ist der Schwimmkörper an im Boden des Gewässers befestigten Betonsockeln verankert.

Die Vorrichtung wird zweckmäßig vor der Küste auf dem offenen Meer bzw. auf größeren Binnengewässern angeordnet.

Der Schwimmkörper, der durch Drahtseile an mehreren im Boden befestigten Betonsockeln verankert ist, wird durch Gelenke in der Höhe und in der Lage flexibel entsprechend der Wellenbewegung und Wasserhöhe gehalten.

Die Aufgabe dieser Verankerung ist es, den Schwimmkörper in seiner Position zu halten, während die Aufgabe der seitlich am Schwimmkörper befestigten Gelenke darin besteht, die Bewegungsfreiheit der Vorrichtung bezüglich der Wellenbewegung sicherzustellen.

Die Größe des Flüssigkeitsbehälters ist variabel, es besteht die Möglichkeit, mehrere Generatoren gleichzeitig anzutreiben. Die Bodenplatte des Flüssigkeitsbehälters sowie die beiden Seiten und die obere Deckplatte werden an beiden Enden nach oben geführt, wodurch an jedem Ende des Behälters eine rechteckige Öffnung entsteht. Auf der Deckplatte befindet sich der Einfüllstutzen für die Flüssigkeit. An den oberen Enden des Behälters befindet sich je ein Schwimmerventil damit die im Flüssigkeitsbehälter befindliche Flüssigkeit nicht in den Bereich der Lauf schaufelräder gelangen kann.

Die Laufschaufelräder, die sich in einem geschlossenen Rohr befinden, sind durch ein Zwischenstück, welches in Laufrichtung der Schaufelräder geführt ist, an den oberen rechteckigen Öffnungen luftdicht mit dem Flüssigkeitsbehälter verschlossen. Das Rohr hat je eine Öffnung für ein Ein- und Auslaßventil, sowie am tiefsten Punkt ein Abtropfventil, durch welches eventuell eingedrungenes Wasser abfließen kann. Am Ende des Rohres tritt die Welle des Laufschaufelrades aus dem Rohr und dient zum Antrieb des Generators.

Zur Inbetriebnahme ist der Flüssigkeitsbehälter durch den dafür vorgesehenen Einfüllstutzen bis zur Markierung mit Flüssigkeit zu füllen. In den beiden oberen Enden des Behälters verbleiben Luftkammern.

Durch die Wellenbewegung des Wassers wird die Flüssigkeit bzw. das Wasser im Flüssigkeitsbehälter ebenfalls in Bewegung versetzt. Durch diese Bewegung wird die kinetische Energie des Wassers auf die im oberen Teil des Flüssigkeitsbehälters vorhandene Luft übertragen. Hierdurch wird ein Luftdruck erzeugt, der das Laufschaufelrad in Bewegung versetzt und durch das Luftauslaßventil entweichen kann. Gleichzeitig bildet sich am anderen Ende des Flüssigkeitsbehälters ein Vakuum. Dieses wird durch den Eintritt der Luft durch das Einlaßventil bei gleichzeitiger Inbetriebsetzung des zweiten Laufschaufelrades wieder aufgefüllt.

Die Laufschaufelräder werden somit durch den ständig wechselnden Lufteint- und -austritt fortlaufend in Bewegung gesetzt und gehalten. Hierdurch werden über eine Welle die Generatoren angetrieben.

Die in den oberen Teilen der Luftkammern angebrachten Schwimmerventile verhindern den Eintritt des Wassers in den Bereich der Laufschaufelräder.

Diese Vorrichtung zeichnet sich insbesondere durch eine Energieerzeugung aus, die umweltfreundlich ist und keine Umweltverschmutzung verursacht. Da keine fossilen Brennstoffe benötigt werden, ist die Energieerzeugung mit dieser Vorrichtung sehr wirtschaftlich und preisgünstig. Da nur die immer vorhandenen Wellenbewegungen des Wassers genutzt werden, ist die Anwendung dieser Methode der Energieerzeugung zeitlich unbegrenzt.

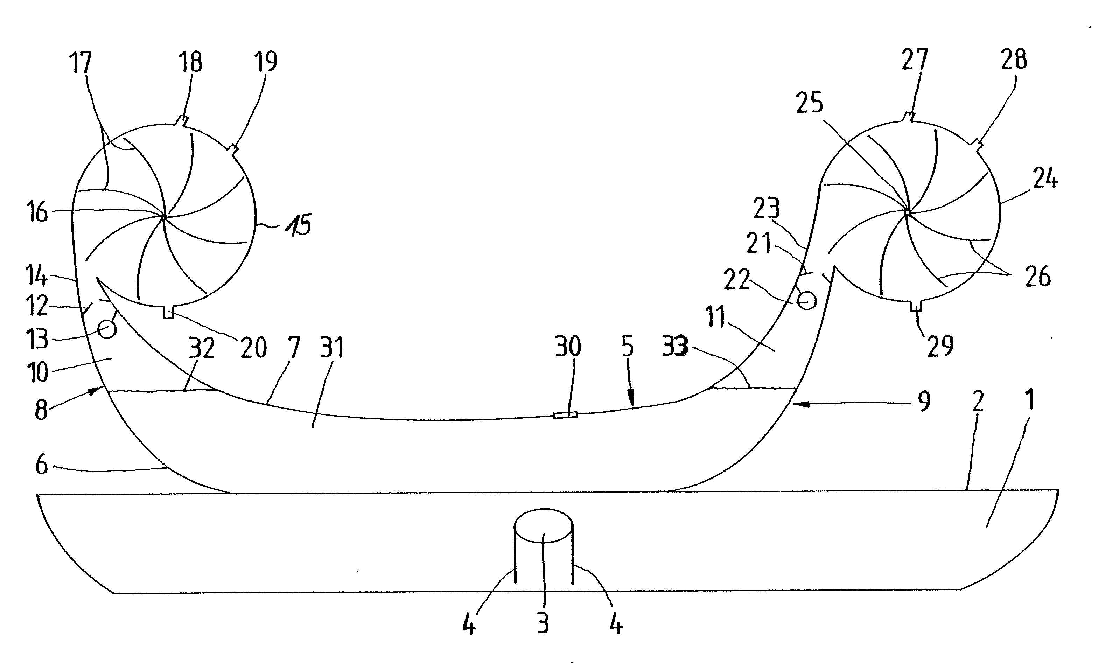

Die Erfindung wird nachfolgend anhand eines in der Zeichnung dargestellten Ausführungsbeispieles des näheren erläutert.

Die in der Zeichnung dargestellte Vorrichtung dient zur Gewinnung elektrischer Energie aus der Wellenbewegung eines Gewassers. Ein langgestreckter Schwimmkörper 1 ist luftdicht mit einer Plattform 2 abgedeckt. Zu beiden Seiten des Schwimmkörpers 1 ist je ein Gelenk 3 vorgesehen, an dem ein Drahtseil 4 angeordnet ist. Mit dem Drahtseil 4 ist der Schwimmkörper 1 in nicht näher dargestellter Weise an mehreren im Boden des Gewässers befestigten Betonsockeln verankert. Dadurch wird erreicht, daß der Schwimmkörper 1 in der Höhe und der Lage flexibel ist und entsprechend der Wellenbewegung und der Wasserhöhe des Gewässers gehalten werden kann. Hierdurch bleibt der Schwimmkörper in seiner vorgegebenen Position, wobei gleichzeitig seine Bewegungsfreiheit bezüglich der Wellenbewegung sichergestellt ist.

Auf der Plattform 2 des Schwimmkörpers 1 ist ein Flüssigkeitsbehälter 5 vorgesehen, der eine Bodenplatte 6, eine obere Deckplatte 7 und an beiden Seiten je eine nicht näher dargestellte Seitenplatte aufweist. Die Bodenplatte 6 und die Deckplatte 7 sind an beiden Enden hochgezogen, so daß am vorderen Ende 8 und am hinteren Ende 9 des Flüssigkeitsbehälters 5 eine vordere Luftkammer 10 und eine hintere Luftkammer 11 gebildet sind.

Am oberen Ende der Luftkammer 10 ist ein aus einem Ventilsitz 12 und einem Schwimmer 13 bestehendes Schwimmerventil angeordnet.

Am vorderen oberen Ende 14 des Flüssigkeitsbehälters 5 ist ein Schaufelradgehäuse 15 angeordnet, in dem auf einer Welle 16 ein Schaufelrad mit acht Schaufeln 17 drehbar gelagert ist. Im oberen Bereich des Schaufelradgehäuses 15 sind ein Auslaßventil 18 und ein Einlaßventil 19 vorgesehen. Am tiefsten Punkt des Schaufelradgehäuses 15 ist ein Abtropfventil 20 angeordnet, damit Wasser, das in das Schaufelradgehäuse 15 gelangt ist, durch das Abtropfventil 20 abtropfen kann.

Am hinteren Ende des Flüssigkeitsbehälters ist die Anordnung ähnlich getroffen. Am oberen Ende der Luftkammer 11 ist ein aus einem Ventilsitz 21 und einem Schwimmer 22 gebildetes Schwimmerventil vorgesehen. Am hinteren oberen Ende 23 des Flüssigkeitsbehälters 5 ist ein Schaufelradgehäuse 24 vorgesehen, in dem auf einer Welle 25 ein Schaufelrad mit acht Schaufeln 26 drehbar gelagert ist. Im oberen Bereich des Schaufelradgehäuses 24 sind ein Auslaßventil 27 und ein Einlaßventil 28 angeordnet. Am tiefsten Punkt des Schaufelradgehäuses 24 ist ein Abtropfventil 29 angeordnet.

Der Flüssigkeitsbehälter 5 hat in der Deckplatte 7 einen Einfüllstutzen 30, durch den der Flüssigkeitsbehälter 5 mit Flüssigkeit, insbesondere mit Wasser 31 soweit gefüllt wird, bis das Wasser 31 den Wasserspiegel 32 bzw. 33 erreicht.

Wenn diese Vorrichtung sich auf einem Gewässer mit Wellengang befindet, wird das Wasser 31 im Flüssigkeitsbehälter 5 durch die Wellenbewegung ebenfalls in Bewegung versetzt. Durch diese Bewegung des Wassers 31 wird die kinetische Energie des Wassers auf die in den beiden nach oben gebogenen Teilen des Behälters 5 vorhandene Luft innerhalb der Luftkammern 10 und 11 übertragen.

Wenn die Vorrichtung am rückwärtigen Ende 9 durch eine Welle angehoben wird, erhöht sich der Wasserspiegel 33, so daß in der Luftkammer 10 ein Überdruck entsteht, so daß die Luft aus der Luftkammer 10 durch das Schwimmerventil 12,13

in das Schaufelradgehäuse 15 strömt und hier das Schaufelrad 17 antreibt. Anschließend verläßt die Luft das Schaufelradgehäuse 15 durch das Auslaßventil 18.

Gleichzeitig bildet sich in der Luftkammer 11 ein Unterdruck, so daß Luft aus der äußeren Atmosphäre durch das Einlaßventil 28 in das Schaufelradgehäuse 24 einströmt und eine Drehung des Schaufelrades 26 bewirkt. Anschließend strömt die Luft durch das Schwimmerventil 21,22 in die Luftkammer 11.

Die Schaufelräder werden somit durch den ständig wechselnden Luftein- und austritt fortlaufend in Bewegung gesetzt und in Bewegung gehalten. Hierdurch werden über eine nicht näher dargestellte Welle ebenfalls nicht im einzelnen veranschaulichte Generatoren angetrieben.

Die in den oberen Teilen der Luftkammern 10 und 11 angebrachten Schwimmerventile verhindern den Eintritt des Wassers 31 in das Schaufelradgehäuse Dennoch in das Schaufelradgehäuse gelangtes Wasser kann durch die Abtropfventile 20 und 29 aus den Schaufelradgehäusen 15 und 24 abfließen.

## Ansprüche

1. Vorrichtung zur Gewinnung elektrischer Energie mit einem mit Flüssigkeit teilgefüllten langgestreckten Flüssigkeitsbehälter, dessen beide Enden unter Bildung je einer Luftkammer hochgezogen sind, mit zwei an den hochgezogenen Enden des Flüssigkeitsbehälters über je ein Zwischenstück angeordneten Schaufelradgehäusen mit auf Wellen drehbar gelagerten Schaufelrädern und mit Auslaß- und Einlaßventilen und mit von den Wellen angetriebenen elektrischen Generatoren,
**dadurch gekennzeichnet,**
daß ein Schwimmkörper (1) zur Anordnung auf einem größeren Gewässer mit genügend hohem Wellengang mit einer Trägerplattform (2) vorgesehen ist, auf der der Flüssigkeitsbehälter (5) gelagert ist, daß an dem Schwimmkörper (1) seitlich Gelenke (3) angeordnet sind und daß der Schwimmkörper (1) durch an den Gelenken (3) angeordnete Drahtseile (4) am Boden des Gewässers verankert ist.

2. Vorrichtung nach Anspruch 1, dadurch gekennzeichnet, daß der Schwimmkörper (1) aus einem wannenförmigen Bodenteil (6) besteht, das luftdicht mit der Trägerplattform (2) verschlossen ist, wobei auf der Trägerplattform (2) der Flüssigkeitsbehälter (1) und der Generatorenteil gelagert sind.

3. Vorrichtung nach Anspruch 1 oder 2, dadurch gekennzeichnet, daß auf der Trägerplattform (2) ein Getriebe für den Generatorenteil angeordnet ist.

4. Vorrichtung nach einem oder mehreren der vorhergehenden Ansprüche, dadurch gekennzeichnet, daß an den tiefsten Punkten der Schaufelradgehäuse (15,24) Abtropfventile (20,29)vorgesehen sind.

5. Vorrichtung nach einem oder mehreren der vorhergehenden Ansprüche, dadurch gekennzeichnet, daß der Schwimmkörper (1) an im Boden des Gewässers befestigten Betonsockeln verankert ist.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| Y | US-A-4110630 (HENDEL) <br> * Spalte 2, Zeile 57 - Spalte 4, Zeile 4 * <br> * Spalte 4, Zeile 41 - Spalte 6, Zeile 15; <br> Figuren 1, 2, 4-7. * <br> --- | 1-5. | H02K7/18 |
| Y | FR-A-2073588 (DORNIER SYSTEM) <br> * Seite 6, Zeile 12 - Zeile 20; Figur 3. * <br> --- | 1-5. | |
| A | US-A-3064137 (CORBETT JR. ET AL) <br> * Spalte 2, Zeile 22 - Spalte 3, Zeile 29; <br> Figuren 1-3. * <br> --- | 1. | |
| Y | US-A-3200255 (YOSHIO MASUDA) <br> * Spalte 1, Zeile 46 - Spalte 6, Zeile 2; <br> Figuren 1-10. * <br> --- | 1, 2. | |
| D,Y | DE-A-2426861 (OSTERKAMP) <br> * Seite 1 - 3; Figur . * <br> ----- | 1, 2. | |

**RECHERCHIERTE SACHGEBIETE (Int. Cl.5 )**

H02K

Der vorliegende Recherchenbericht wurde für alle Patentansprüche erstellt

| Recherchenort | Abschlußdatum der Recherche | Prüfer |
|---|---|---|
| DEN HAAG | 15 SEPTEMBER 1989 | TIO K.H. |

EPO FORM 1503 03.82 (P0403)